# FASCICULE DE BREVET EUROPEEN

(11) **EP 2 415 294 B1**
(45) Date de publication et mention de la délivrance du brevet: **30.08.2017**
(21) Numéro de dépôt: 10716587.0
(22) Date de dépôt: 26.03.2010
(51) Int. Cl.: H04W 12/06, H04L 29/06

(54) **PROCÉDÉ ET DISPOSITIF DE GESTION D'UNE AUTHENTIFICATION D'UN UTILISATEUR**
VERFAHREN UND EINRICHTUNG ZUR VERWALTUNG DER AUTHENTIFIKATION EINES BENUTZERS
METHOD AND DEVICE FOR MANAGING AUTHENTICATION OF A USER

(30) Priorité: 31.03.2009 FR 0952064
(43) Date de publication de la demande: 08.02.2012
(73) Titulaire: Orange, 75015 Paris (FR)
(72) Inventeur: BOURNELLE, Julien, F-75012 Paris (FR); MORAND, Lionel, F-92240 Malakoff (FR)
(74) Mandataire: Millet, Sandrine
(86) Numéro de dépôt international: PCT/FR2010/050563
(87) Numéro de publication internationale: WO 2010/112741

(56) Documents cités:
- EP-A1- 1 613 017
- ABOBA MICROSOFT M BEADLES ENDFORCE J ARKKO ERICSSON P ERONEN NOKIA B: "The Network Access Identifier; rfc4282.txt" IETF STANDARD, INTERNET ENGINEERING TASK FORCE, IETF, CH, 1 décembre 2005 (2005-12-01), XP015043211 ISSN: 0000-0003 cité dans la demande
- 3GPP: "3rd Generation Partnership Project;Technical Specification Group Services and System Aspects;3GPP System Architecture Evolution (SAE);Security aspects of non-3GPP accesses;(Release 8)" 3GPP TS 33.402 V8.2.1,, [Online] vol. 33.402, no. v8.2.1, 1 décembre 2008 (2008-12-01), pages 1-41, XP002545562 Extrait de l'Internet: URL:http://www.3gpp.org/ftp/Specs/archive/ 33_series/33.402/33402-821/zip> [extrait le 2009-09-14] cité dans la demande

## Description

### Domaine de l'invention

Le domaine de l'invention est celui des réseaux de télécommunications, et plus particulièrement de l'authentification d'un utilisateur qui souhaite accéder à un service fourni par un opérateur d'un tel réseau.

Un utilisateur d'un réseau de télécommunications accède à ce réseau par l'intermédiaire d'un réseau d'accès. Plusieurs types d'accès sont disponibles. Parmi eux, on compte les accès fixes, basés par exemple sur la technologie x-DSL (Digital Subscriber Line, en anglais) et les accès mobiles basés sur les technologies UMTS (Universal Mobile Télécommunication System, en anglais), WIFI ou Wlmax.

Certains réseaux d'accès de type paquet IP (Internet Protocol, en anglais) possèdent des infrastructures d'authentification dites AAA (Authentication, Authorization, Accounting, en anglais), qui réalisent l'authentification des utilisateurs, gèrent l'autorisation d'accès aux services demandés et assurent le comptage pour la facturation du service à l'utilisateur.

De façon classique, l'architecture AAA repose sur les principes suivants :

Le terminal de l'utilisateur se raccorde au réseau d'accès via un point d'accès réseau.

Dans le réseau d'accès, un serveur d'accès réseau est responsable du contrôle de l'accès au réseau coeur de transport IP, lequel fournit lui-même des services d'accès à d'autres réseaux IP comme Internet ou encore un réseau IP privé, tel qu'un réseau d'entreprises par exemple.

Dans ce contexte, le rôle du serveur d'accès au réseau est d'authentifier et d'autoriser le terminal à accéder au réseau coeur IP. Pour réaliser ces fonctions, ce serveur d'accès envoie, sur réception d'une requête émise par le terminal, une requête d'accès à un serveur d'authentification en charge de vérifier les paramètres d'authentification fournis par le terminal. Une fois l'authentification réussie, l'accès aux services réseau est autorisé en fonction des droits d'accès associé à l'utilisateur du terminal.

Aujourd'hui, l'architecture AAA est aussi mise en oeuvre pour l'authentification d'un utilisateur déjà connecté au réseau coeur de transport IP d'un opérateur, mais qui souhaite accéder à un service fourni par un système applicatif de ce réseau. Par exemple, pour accéder à un service de mobilité IP qui lui permettra de changer de type d'accès au cours d'une session applicative, l'utilisateur doit s'authentifier une deuxième fois auprès de l'architecture AAA.

Les données d'authentification et d'autorisation sont regroupées dans ce que l'on appelle un profil de données utilisateur. Ce profil est hébergé soit dans le serveur d'authentification recevant la requête d'accès, soit dans un autre serveur d'authentification. Dans ce cas, la requête d'accès est transmise à celui-ci et c'est ce serveur qui assurera l'authentification du terminal.

Une fois les procédures d'authentification et d'autorisation réalisées, le serveur d'accès réseau est en charge de générer des messages de comptage contenant les informations liées aux événements associés à la connexion en cours (début de session, fin de session, volume des données transmises, etc.). Ces messages sont envoyés à un serveur spécialisé qui sera en charge de générer des tickets de facturation en fonction des informations de comptage reçues. Ce serveur peut être co-localisé avec le serveur d'authentification ou être un serveur indépendant.

Les serveurs réalisant les fonctions d'Authentification, Autorisation et/ou Comptage sont appelés génériquement "serveurs AAA". Les serveurs d'accès réseau qui sont les "clients" de ces serveurs AAA sont appelés "clients AAA".

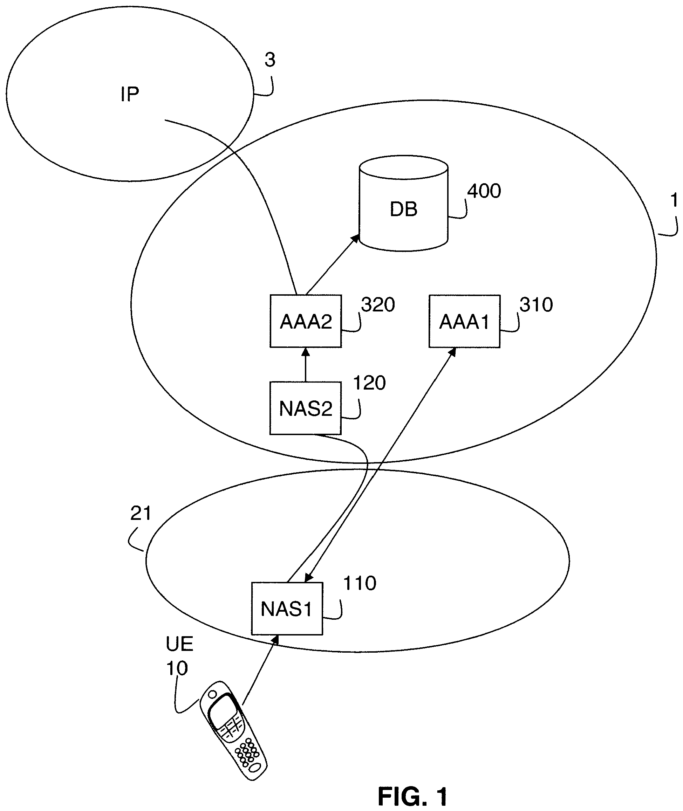

Les protocoles dits AAA sont les protocoles utilisés sur les interfaces entre client AAA et serveur AAA ou entre serveurs AAA. Spécifié à l'IETF, le plus utilisé à ce jour est le protocole RADIUS (IETF RFC 2865). Depuis 2002, l'IETF a défini un nouveau protocole appelé Diameter (IETF RFC 3588), successeur de RADIUS permettant de répondre aux nouveaux besoins fonctionnels et contraintes induits par l'émergence de nouveaux types de réseaux d'accès et de nouveaux services réseaux comme la gestion de mobilité IP par exemple.
L'architecture AAA va maintenant être décrite en relation avec la **figure 1****.**

On considère un terminal d'utilisateur UE 10 (User Equipment, en anglais), qui souhaite accéder à un réseau de données IP 3 tel que l'Internet. II se connecte dans un premier temps au réseau de télécommunications 1 de l'opérateur auprès d'un serveur de gestion d'accès (Network Access Server, en anglais) NAS1 110 d'un réseau d'accès 20. Au niveau du réseau d'accès, on parle aussi de point d'accès (Access Point ou AP, en anglais). Il peut s'agir d'un accès fixe de type x-DSL ou d'un accès mobile de type WIFI, par exemple. Cette connexion nécessite une première authentification qui est demandée par le serveur de gestion de l'accès NAS1 110 à un serveur d'authentification AAA1 210 du réseau 1. Le serveur d'authentification AAA1 210 récupère un profil de l'utilisateur auprès d'une base de données DB 400 qui peut être locale ou centralisée.

Une fois cette première authentification réussie, le terminal émet une requête d'accès au réseau IP (ou service) 3 auprès d'un serveur de gestion d'accès à ce service ou NAS2 120. Il utilise pour ce faire un protocole permettant d'établir une connexion IP.

Plusieurs protocoles peuvent être utilisés en fonction du type de réseau d'accès et du type de réseau auquel on souhaite accéder. On cite à titre d'exemple le protocole PPP (Point To Point Protocol, en anglais, décrit dans le document IETF RFC 1661) pour les accès fixes à Internet à l'aide de modem de type RTC, le protocole IEEE 802.1X (décrit dans le document IEEE standard 802.1X-2001 "Port-Based network Access Control") pour les accès Wifi ou encore le protocole IKEv2 (Internet Key Exchange V2, en anglais, RFC 4306) pour la mise en place d'association de sécurité IPsec pour les accès de type VPN (Virtual Private Network, en anglais) ou I-WLAN.

Le serveur de gestion d'accès au service NAS2 émet une demande d'authentification de l'utilisateur auprès d'un serveur d'authentification AAA2 120. On comprend que ce serveur d'authentification peut être différent de celui qui a réalisé la première authentification de l'utilisateur.

L'architecture AAA donne en effet la possibilité de distribuer sur un territoire donné plusieurs serveurs d'accès réseau chargés de contrôler l'accès aux ressources. Lorsque plusieurs serveurs AAA sont déployés dans le réseau, chaque serveur peut avoir sa propre base de données utilisateur ou tous les serveurs sont connectés à une base de données centralisée. L'architecture centralisée est celle que l'on retrouve notamment dans les réseaux mobiles. L'utilisation d'une base centralisée permet à l'utilisateur de pouvoir se déplacer sur n'importe quel point d'accès réseau tout en étant sûr de pouvoir être authentifié et autorisé à accéder à ses services.

Lorsque, comme dans l'exemple de la **figure 1**, l'utilisateur souhaite accéder à un service qui nécessite deux authentifications successives, il est souhaitable de tirer partie de la première authentification pour simplifier la deuxième. A cet égard, il existe par ailleurs des mécanismes de réauthentification au niveau local. Ces mêmes mécanismes pourraient être réutilisés ou adaptés dans le cadre d'authentifications successives auprès d'un même opérateur. Par exemple, le protocole ERP (EAP Extension for EAP Re-authentication Protocol, en anglais, défini à l'IETF dans le RFC 5296) permet de réutiliser le matériel cryptographique issu d'une première authentification réalisée avec le protocole EAP (Extensible Authentication Protocol, en anglais défini à l'IETF dans le RFC 3748). Ceci permet de réduire le nombre de messages de signalisation échangés dans le réseau ainsi que les temps de calculs sur les équipements concernés. Ceci étant particulièrement vrai dans le cas où le terminal se situe dans un réseau visité et que le matériel cryptographique est détenu dans le réseau local.

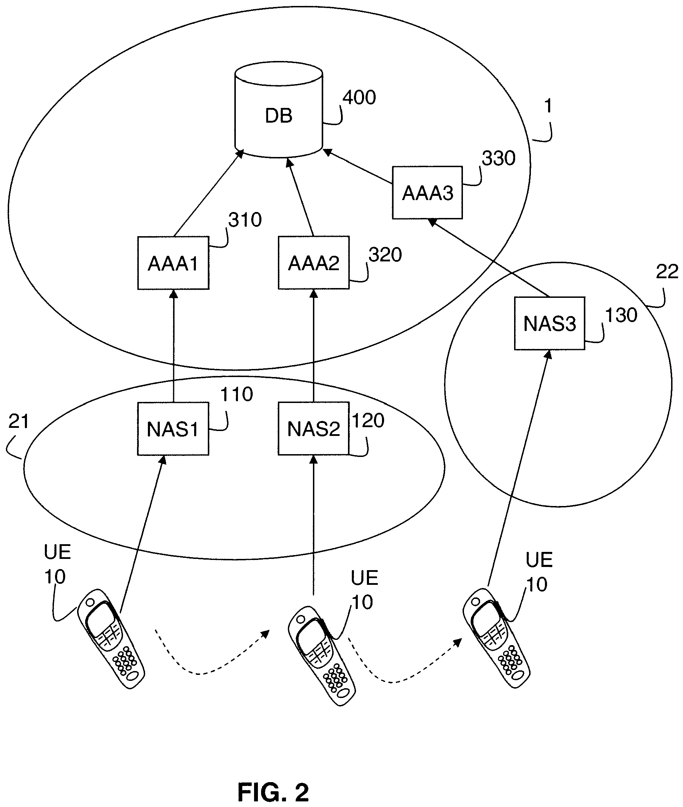

Toutefois, de tels mécanismes risquent d'être inopérants lorsque l'utilisateur, déjà authentifié une première fois par le réseau, ne s'adresse pas au même serveur NAS1 de gestion d'accès au réseau lors d'une deuxième authentification. Une telle situation survient notamment dans l'exemple précédent lorsque l'accès au réseau d'accès et l'accès au réseau Internet sont gérés par des serveurs de gestion d'accès différents. Elle survient également lorsque l'utilisateur est nomade et a changé de réseau d'accès depuis la première authentification dans le réseau d'accès. Un tel cas va maintenant être présenté en relation avec la **figure 2**.

Le terminal UE 10 s'est connecté au réseau d'accès 21, par exemple un réseau d'accès mobile de type Wifi. Un serveur de gestion d'accès NAS1 et un serveur d'authentification AAA1 ont pris en charge les procédures de connexion et d'authentification adéquates. On suppose que l'utilisateur se déplace et change de point d'accès au réseau d'accès 21. Il doit se reconnecter au réseau d'accès au cours d'une procédure dite de transfert (handover, en anglais), auprès d'un deuxième serveur de gestion d'accès au réseau NAS2 120.

On considère le document RFC 4282 de l'IETF de Aboba et al, intitulé "The Network Access Identifier", qui enseigne l'utilisation d'un identifiant de réseau d'accès (Network Access Identifier ou NAI, en anglais) soumis par l'utilisateur au serveur de gestion d'accès NAS1, NAS2 lors de ses demandes d'accès à un service. Cet identifiant indique le domaine de l'opérateur auprès duquel l'utilisateur a souscrit un abonnement. Sur réception de cet identifiant, le serveur de gestion d'accès au service fait une requête DNS pour récupérer l'adresse du ou des serveurs AAA correspondant à ce domaine.

Un problème se pose lorsque, comme dans l'exemple de la **figure 2**, plusieurs serveurs AAA ont été déployés pour ce domaine, ce qui peut arriver pour des raisons de partage de charge et de sécurité.

En effet, dans ce cas, la connaissance de l'identifiant NAI ne permet pas au serveur de gestion d'accès d'identifier quel serveur AAA local a la charge de cet utilisateur parmi les serveurs AAA déployés dans le domaine.

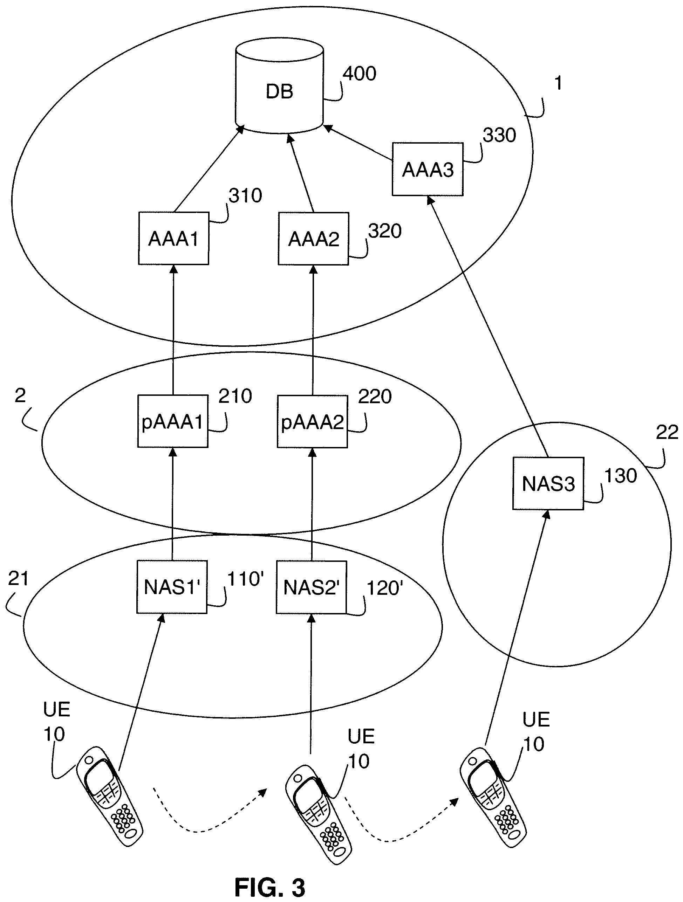

En relation avec la **figure 3**, on considère maintenant le cas où l'utilisateur se trouve en plus en situation de "roaming", c'est-à-dire qu'il accède à un service auquel il a souscrit auprès de son opérateur via le réseau 2 d'un opérateur tiers. Un serveur de gestion d'accès NAS1' et un serveur d'authentification proxy pAAA1 du réseau visité 2 prennent en charge les procédures de connexion et d'authentification adéquates. Le serveur de gestion d'accès au service local NAS1' fait dans ce but une requête DNS pour récupérer l'adresse d'un serveur AAA proxy local pAAA1. Le serveur pAAA1 contacte ensuite un serveur AAA du réseau 1, dit réseau de rattachement ou "home" de l'utilisateur, lequel procède à l'authentification. Le serveur d'authentification AAA1 du réseau 1 a récupéré au préalable un profil de l'utilisateur auprès de la base de données DB 400 du réseau 1.

On suppose ensuite que, comme dans l'exemple précédent l'utilisateur se déplace et change de point d'accès au réseau d'accès 21'. Il doit se reconnecter au réseau d'accès au réseau visité 2 au cours d'une procédure dite de transfert (handover, en anglais), auprès d'un deuxième serveur NAS2' de gestion d'accès au réseau. Ce deuxième serveur de gestion NAS2' contacte un serveur d'authentification proxy pAAA2 par défaut, lequel s'adresse à son tour à un serveur AAA AAA2 du réseau home 1.

A cet égard, la norme 3GPP TS 23.402 décrit une solution pour que le serveur AAA2 récupère un identifiant du serveur AAA1 qui a procédé à une première authentification de l'utilisateur auprès de la base de données DB 400, dans le cas particulier où celle-ci serait implémentée dans un serveur HSS (Home Subscriber Service, en anglais). Le serveur AAA2 peut alors se comporter de deux façons :
- soit il se comporte comme proxy et transmet la requête d'authentification de l'utilisateur nomade vers le serveur AAA1 du réseau 1 ;
- soit il envoie au serveur AAA proxy pAAA2 du domaine visité 2 l'identité du serveur AAA1 pour qu'il récupère auprès de lui le profil de l'utilisateur.

On comprend qu'aucune de ces options n'offre la possibilité au serveur de gestion NAS2' de récupérer l'identité du serveur proxy pAAA1 qui avait été utilisé lors de la première authentification. Ainsi, si le serveur proxy pAAA1 possèdait du matériel cryptographique supplémentaire permettant une réauthentification rapide du terminal de l'utilisateur, il ne peut pas être exploité.

Il faut noter que la norme 33.402 décrit cette solution dans le but d'éviter une nouvelle transmission du profil de l'utilisateur vers un autre serveur AAA AAA2, pas dans celui d'optimiser le processus de ré-authentification de l'utilisateur en situation de nomadisme.

Le document EP1613017A1 décrit un terminal comprenant un émetteur d'une première information d'authentification configuré pour transmettre la première information d'authentification comprenant un identifiant utilisateur à un équipement relai, une unité de stockage d'un identifiant temporaire configuré pour stocker un identifiant temporaire généré par un serveur d'authentification ayant reçu la première information d'authentification via l'équipement relai et un émetteur d'une seconde information d'authentification configuré pour transmettre à l'équipement relai la seconde information d'authentification comprenant l'identifiant temporaire et un identifiant d'un serveur d'authentification pour identifier le serveur d'authentification.

### Exposé de l'invention

L'invention permet de remédier à cet inconvénient à l'aide d'un procédé de gestion d'une authentification d'un utilisateur d'un réseau de télécommunications d'un opérateur, caractérisé en ce qu'il comprend les étapes suivantes :
- sur réception d'une demande d'accès à un service fourni par l'opérateur de ce réseau par ledit utilisateur, émission d'une requête d'identification d'un serveur d'authentification à destination d'un serveur de localisation d'authentification, ladite requête comprenant au moins un identifiant dudit utilisateur (user-ID); et
- sur réception d'une réponse comprenant un identifiant d'un serveur d'authentification associé (AAA_ID) audit identifiant de l'utilisateur, émission d'une demande d'authentification de l'utilisateur auprès du serveur identifié pour le service demandé.

Un tel procédé permet au serveur de gestion d'accès au service demandé de savoir si l'utilisateur requérant a déjà été authentifié dans le réseau de l'opérateur et, le cas échéant, d'obtenir l'identifiant du serveur d'authentification qui a effectué cette authentification. On comprend que dans le cas où le serveur de gestion d'accès au service appartient à un réseau visité, il obtient l'identifiant du serveur proxy AAA localement en charge de cette utilisateur..

L'invention permet ainsi d'éviter d'avoir recours à une authentification complète quand du matériel d'authentification utilisé lors d'une authentification précédente est disponible dans un serveur d'authentification du réseau de l'opérateur, notamment dans un serveur AAA proxy d'un réseau visité.

Selon un aspect de l'invention, sur réception d'une réponse ne comprenant pas d'identifiant de serveur d'authentification associé à l'identifiant de l'utilisateur, le procédé met en oeuvre une étape d'émission d'une demande d'authentification auprès d'un serveur d'authentification prédéterminé.

Ainsi, lorsqu'aucune association n'a été mémorisée, le serveur de gestion d'accès au service demandé s'adresse à un serveur d'authentification prédéfini.

L'invention concerne également un dispositif de gestion d'une authentification d'un utilisateur d'un réseau de télécommunications d'un opérateur, caractérisé en ce qu'il comprend des moyens de mise en oeuvre du procédé de gestion d'une authentification selon l'invention qui vient d'être décrit.

L'invention concerne aussi un serveur de gestion d'accès à un service fourni par un opérateur d'un réseau de télécommunications, caractérisé en ce qu'il comprend un dispositif de gestion d'authentification d'un utilisateur selon l'invention.

L'invention concerne également un procédé de mémorisation d'une localisation d'authentification d'un utilisateur d'un réseau de télécommunications, caractérisé en ce qu'il comprend, suite à une authentification réussie dudit utilisateur par un serveur d'authentification, une étape de mémorisation d'une association entre au moins un identifiant dudit utilisateur et un identifiant dudit serveur d'authentification. Dans le cas d'une situation de "roaming", l'étape de mémorisation concerne une association entre au moins un identifiant dudit utilisateur et un identifiant dudit serveur AAA proxy du réseau visité.

En cas d'une première authentification réussie, il consiste à enregistrer une association entre un identifiant de l'utilisateur et un identifiant du serveur d'authentification prédéfini dans la base de données, en vue d'une prochaine authentification du même utilisateur. Dans le cas d'une situation de roaming, l'association concerne un identifiant de l'utilisateur et le serveur AAA local ayant joué le rôle de proxy et ayant reçu du matériel cryptographique relatif à l'utilisateur.

On notera que le serveur AAA, suite à une authentification réussie, est apte à gérer un état de la session AAA établie pour le terminal de l'utilisateur. Par conséquent, il dispose localement d'informations lui permettant d'établir s'il s'agit d'une première authentification ou d'une réauthentification de ce terminal. Il en déduit donc dans quelles circonstances le procédé de mémorisation selon l'invention doit être mis en oeuvre.
L'invention concerne également un dispositif de mémorisation d'une localisation d'authentification d'un utilisateur d'un réseau de télécommunications, caractérisé en ce qu'il comprend des moyens pour la mise en oeuvre du procédé de mémorisation selon l'invention qui vient d'être décrit.

L'invention concerne en outre un serveur d'authentification d'un utilisateur qui demande à accéder à un service fourni par un opérateur d'un réseau de télécommunications, caractérisé qu'il comprend un dispositif de mémorisation d'une localisation d'authentification selon l'invention.

L'invention concerne en outre un serveur de localisation d'authentification dans un réseau de télécommunications, caractérisé en ce qu'il comprend des moyens de mémorisation d'une association entre un identifiant d'un utilisateur et un identifiant d'un serveur d'authentification et des moyens d'obtention de l'association mémorisée en réponse à une requête reçue d'un serveur de gestion d'accès à un service fourni par le réseau.

L'invention concerne un réseau de télécommunications d'un opérateur, comprenant au moins un premier serveur de gestion d'accès à au moins un service et au moins un deuxième serveur de gestion d'accès à au moins un service d'un opérateur et au moins deux serveurs d'authentification aptes à authentifier un utilisateur qui demande à accéder audit au moins un service, caractérisé en ce qu'il comprend un serveur de localisation d'authentification selon l'invention et en ce que le premier serveur de gestion d'accès et le deuxième serveur de gestion d'accès comprennent un dispositif de gestion d'authentification selon l'invention.

Dans un mode particulier de réalisation, les différentes étapes du procédé de gestion d'accès à un service sont déterminées par des instructions de programmes d'ordinateurs.

En conséquence, l'invention vise aussi un programme d'ordinateur sur un support d'informations, ce programme étant susceptible d'être mis en oeuvre dans un dispositif d'acheminement, de réception ou de transmission ou plus généralement dans un ordinateur, ce programme comportant des instructions adaptées à la mise en oeuvre des étapes d'un procédé de gestion d'authentification d'un utilisateur tel que décrit ci-dessus.

Dans un mode particulier de réalisation, les différentes étapes du procédé de mémorisation d'une localisation d'authentification d'un utilisateur sont déterminées par des instructions de programmes d'ordinateurs.

En conséquence, l'invention vise aussi un programme d'ordinateur sur un support d'informations, ce programme étant susceptible d'être mis en oeuvre dans un dispositif d'acheminement, de réception ou de transmission ou plus généralement dans un ordinateur, ce programme comportant des instructions adaptées à la mise en oeuvre des étapes d'un procédé de de gestion d'authentification d'un utilisateur tel que décrit ci-dessus.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure 1 présente de façon schématique un premier exemple de mise en oeuvre d'une architecture AAA dans un réseau de télécommunications d'un opérateur selon l'art antérieur;
- la figure 2 présente de façon schématique un deuxième exemple de mise en oeuvre d'une architecture AAA dans un réseau de télécommunications d'un opérateur selon l'art antérieur;
- la figure 3 présente de façon schématique un troisième exemple de mise en oeuvre d'une architecture AAA dans un réseau de télécommunications dans le cas où le terminal accède à un service d'un opérateur tiers selon l'art antérieur;
- la figure 4 présente de façon schématique un réseau de télécommunications d'un opérateur siège de l'invention;
- la figure 5 présente de façon schématique un réseau de télécommunications d'un opérateur siège de l'invention, dans le cas où l'utilisateur est en situation de "roaming";
- la figure 6 présente de façon schématique la structure d'un serveur de localisation d'authentification d'un utilisateur selon l'invention;
- la figure 7 illustre de façon schématique les étapes du procédé de gestion d'authentification d'un utilisateur selon l'invention;
- la figure 8 présente la structure d'un dispositif de gestion d'authentification d'un utilisateur selon l'invention;
- la figure 9 illustre de façon schématique les étapes du procédé de mémorisation d'une localisation d'authentification d'un utilisateur selon l'invention;
- la figure 10 présente la structure d'un dispositif de mémorisation d'une localisation d'authentification d'un utilisateur selon l'invention; et
- la figure 11 présente un diagramme de flux échangés entre l'utilisateur souhaitant accéder à un service et une architecture d'authentification AAA dans un réseau de télécommunications selon l'invention;

### Description d'un mode de réalisation particulier de l'invention

Pour rappel, le principe général de l'invention repose sur :
- la mémorisation d'une association entre l'identifiant d'un utilisateur et l'identifiant d'un serveur d'authentification suite à l'authentification réussie de cet utilisateur dans un réseau de télécommunications;
- l'obtention de cette association sur réception d'une nouvelle demande d'accès à un service du réseau de l'opérateur par cet utilisateur.

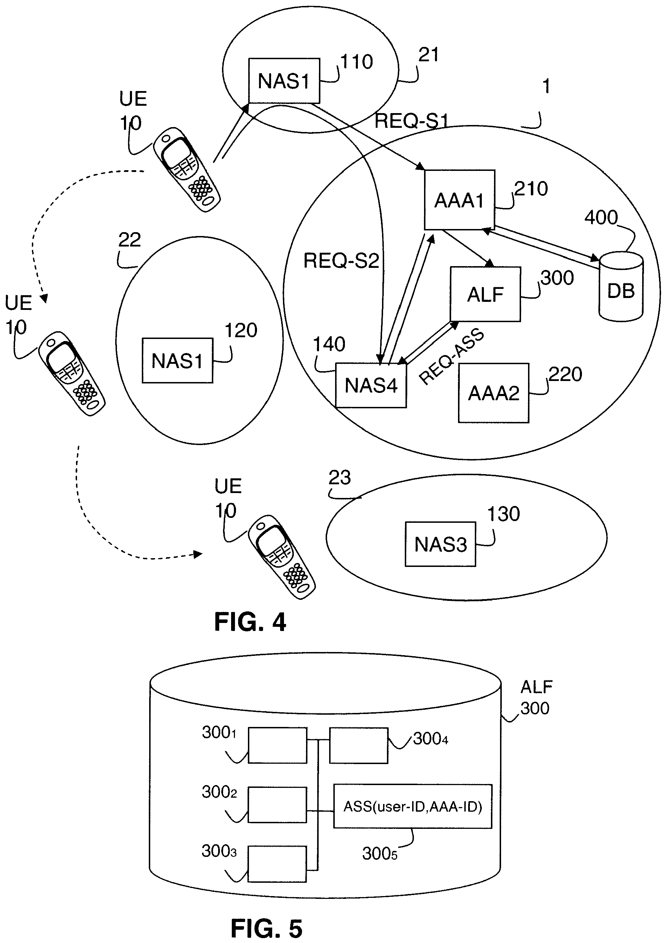

Dans la suite de la description, on considère un réseau de télécommunications 1 d'un opérateur tel que celui de la **figure 4**. Il est accessible à un terminal d'utilisateur UE 10 qui a préalablement souscrit un abonnement auprès de cet opérateur. Selon la nature de son abonnement, l'utilisateur peut accéder au réseau de télécommunications 1 et aux services fournis par l'opérateur sur ce réseau via une pluralité de réseaux d'accès 21, 22 qui peuvent être basés sur tout type de technologie d'accès, fixe ou mobile.

Le réseau de télécommunications 1 héberge une architecture d'authentification AAA telle que celle précédemment décrite dans l'art antérieur. Une telle architecture comprend notamment plusieurs serveurs de gestion d'accès à un service NAS1 110, NAS2 120, chacun en charge de l'accès à un réseau/service différent. Dans l'exemple de la figure 3, le serveur NAS1 est en charge de gérer l'accès au réseau 1 par l'intermédiaire du réseau d'accès 21, le serveur NAS2 120 en charge de l'accès au réseau (ou service) 1 par l'intermédiaire du réseau d'accès 22, le serveur NAS3 en charge du réseau d'accès (ou service) 23 et le serveur NAS4 140 en charge de l'accès au réseau IP (ou service) 3. L'architecture AAA comprend aussi une pluralité de serveurs d'authentification AAA1, AAA2 répartis dans le réseau de télécommunications 1.

Selon l'invention, l'architecture AAA du réseau de télécommunications 1 comprend en outre un serveur de localisation d'authentification ALF 300. Il comprend des moyens de réception d'une association ASS(user-ID, AAA-ID) en provenance d'un serveur de gestion d'accès à un service suite à l'authentification réussie d'un utilisateur identifiable par un identifiant d'utilisateur user-ID par un serveur d'authentification identifiable par un identifiant AAA-ID. Il comprend aussi des moyens de stockage de l'association reçue dans une base de données. Il comprend enfin des moyens d'interrogation de la base de données à partir d'un identifiant d'utilisateur aptes à obtenir une association comprenant ledit identifiant, s'il en existe une dans la base de données.

Dans l'exemple décrit en relation avec la **figure 5**, le serveur de localisation ALF 300 comprend les éléments matériels que l'on retrouve classiquement dans un ordinateur conventionnel ou un routeur spécialisé, à savoir un processeur 300₁, une mémoire vive de type RAM 300₂, une mémoire morte de type ROM 300₃ et des moyens 300₄ de télécommunications avec le réseau 1.

Conformément à l'invention, le serveur de localisation ALF 300 comporte une mémoire 300₅ comprenant une base de données dans laquelle sont stockées les associations entre un identifiant user-ID de l'utilisateur UE 10 et un identifiant du AAA-ID serveur d'authentification AAA1 ayant réalisé une authentification réussie de l'utilisateur. On notera que cette mémoire peut aussi bien être externe au dispositif 300 pourvu qu'il puisse y accéder.

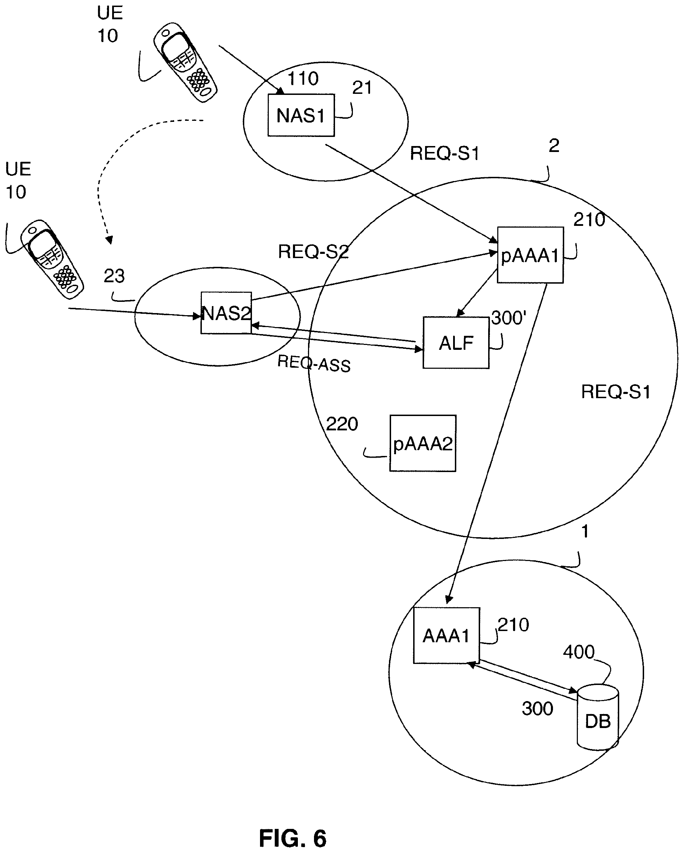

En relation avec la **figure 6****,** on considère un réseau de télécommunications 1 d'un opérateur auprès duquel le terminal d'utilisateur UE 10 a souscrit à un abonnement pour accéder à des services. On suppose que cet opérateur a signé des accords dits de "roaming" avec un opérateur tiers, qui permettent notamment au terminal d'utilisateur UE10 d'accéder au réseau 1 et aux services qu'il a souscrits via un réseau 2 de l'opérateur tiers, dit réseau visité.

Selon l'invention, un serveur de localisation ALF 300' est alors mis en oeuvre dans le réseau 2 pour répondre aux requêtes de localisation émises par les serveurs de gestion d'accès NAS1', NAS2' du réseau 2. En réponse à de telles requêtes, il est apte à fournir, quand elle existe, une association entre un identifiant de l'utilisateur dans le réseau visité 2 et un identifiant d'un serveur proxy AAA du réseau 2 ayant procédé à une première authentification de ce terminal UE10.

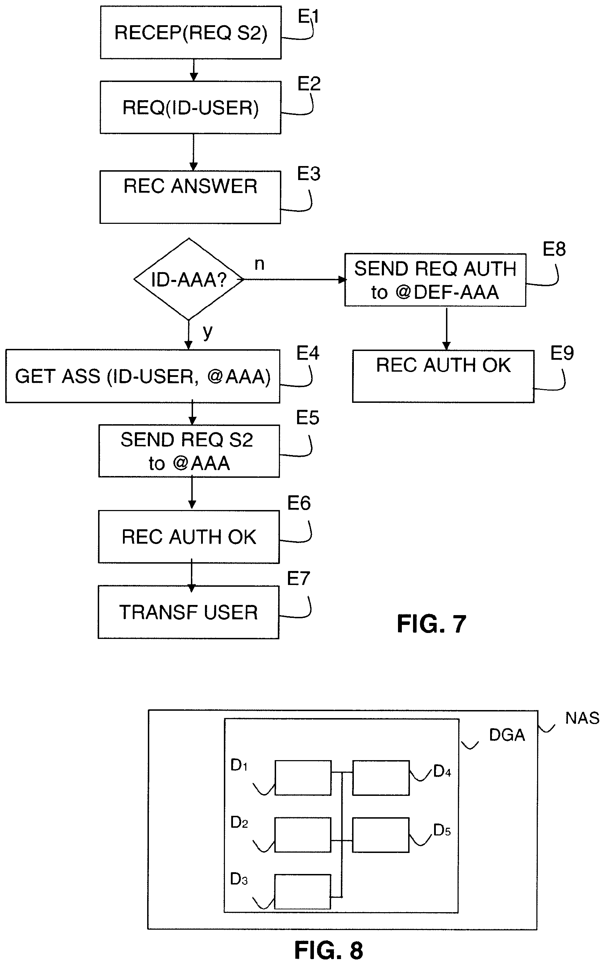

L'invention concerne aussi un procédé de gestion d'authentification d'un utilisateur qui va maintenant être décrit en relation avec la **figure 7****.** Un tel procédé comprend une étape E1 de réception d'une demande d'accès REQ-S2 à un service S2 émise par un utilisateur UE 10 du réseau de télécommunications 1. Il s'agit par exemple du service d'accès au réseau Internet 3. Sur réception de cette requête, une étape E2 d'interrogation du serveur de localisation LRF 300 est mise en oeuvre. Une telle interrogation consiste à envoyer au serveur de localisation LRF 300 une requête comprenant au moins un identifiant user-ID de l'utilisateur requérant. Une réponse RESP est reçue en E3.

Si la réponse RESP contient une association ASS(user-ID, AAA-ID) comprenant à la fois l'identifiant de l'utilisateur requérant et un identifiant d'un serveur AAA du réseau de télécommunications 1 ayant déjà réalisé une authentification de cet utilisateur, alors une étape d'obtention d'une adresse IP correspondant à l'identifiant de serveur AAA reçu est mise en oeuvre en E4. Il peut s'agir par exemple d'une interrogation d'un serveur de type DNS. Sur réception de l'adresse IP @AAA demandée, une requête d'authentification de l'utilisateur requérant est envoyée à l'adresse @AAA du serveur AAA identifié dans une étape E5. En E6, un message d'authentification réussie est reçu en retour. Il est transmis en E7 au terminal de l'utilisateur requérant.

Si au contraire la réponse RESP ne contient pas d'association ASS, alors une demande d'authentification REQ-AUTH est émise, en E8, à destination d'un serveur d'authentification prédéterminé, dont l'adresse est stockée par défaut par le serveur de gestion d'accès NAS qui met en oeuvre le procédé de gestion d'authentification selon l'invention. Lorsqu'une réponse indicatrice d'une authentification réussie REP-AUTH-OK est reçue en E9, elle est transmise en E10 à l'utilisateur requérant.

Selon un mode de réalisation de l'invention, le procédé de gestion d'authentification d'un utilisateur est mis en oeuvre dans un dispositif DGA de gestion d'authentification, qui va être maintenant décrit en relation avec la **figure 8****.** Il comprend les éléments matériels que l'on retrouve classiquement dans un ordinateur conventionnel ou un routeur spécialisé, à savoir un processeur D₁, une mémoire vive de type RAM D₂, une mémoire morte de type ROM D₃ et des moyens D₄ de télécommunications avec le réseau 1.

Conformément à l'invention, le dispositif 25 comporte une mémoire D₅ qui constitue un support d'enregistrement conforme à l'invention. Ce support mémorise le programme d'ordinateur conforme à l'invention. Ce programme comporte des instructions pour l'exécution des étapes du procédé de gestion d'authentification d'un utilisateur conforme à l'invention qui vient d'être décrit en référence à la **figure 7****.**

De façon avantageuse le dispositif de gestion d'authentification selon l'invention est mis en oeuvre dans un serveur NAS de gestion de l'accès à un service d'un utilisateur.

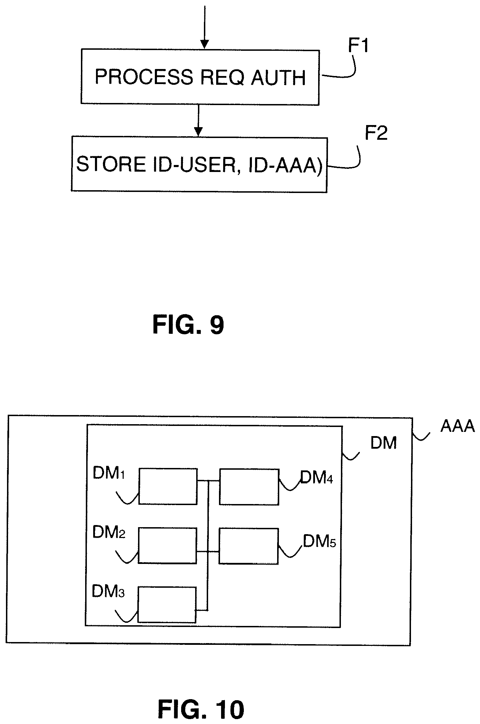

L'invention concerne également un procédé de mémorisation d'une localisation de l'authentification d'un utilisateur dans le réseau de télécommunications 1, qui va maintenant être décrit en relation avec la **figure 9****.** Selon l'invention, un tel procédé consiste, suite à une étape F1 d'authentification réussie de l'utilisateur, à demander en F2 au serveur de localisation ALF 300 la mémorisation d'une association ASS(user6ID, AAA-ID)entre au moins un identifiant user-ID de l'utilisateur UE 10 et un identifiant du serveur d'authentification AAA qui a effectué l'authentification.

Selon un mode de réalisation de l'invention, le procédé de mémorisation d'une localisation d'authentification d'un utilisateur est mis en oeuvre dans un dispositif DM de mémorisation d'une localisation qui va être maintenant décrit en relation avec la **figure 10****.** Il comprend les éléments matériels que l'on retrouve classiquement dans un ordinateur conventionnel ou un routeur spécialisé, à savoir un processeur DM₁, une mémoire vive de type RAM DM₂, une mémoire morte de type ROM DM₃ et des moyens DM₄ de télécommunications avec le réseau 1. De tels moyens de télécommunications comprennent notamment une interface avec le serveur de localisation d'authentification ALF 300, 300' selon l'invention.

Conformément à l'invention, le dispositif DM comporte une mémoire DM₅ qui constitue un support d'enregistrement conforme à l'invention. Ce support mémorise le programme d'ordinateur conforme à l'invention. Ce programme comporte des instructions pour l'exécution des étapes du procédé de mémorisation d'une localisation d'authentification d'un utilisateur conforme à l'invention qui vient d'être décrit en référence à la **figure 9****.**

De façon avantageuse, un tel dispositif est mis en oeuvre dans le serveur d'authentification AAA qui a effectué l'authentification de l'utilisateur.

A titre de variante, il pourrait être mis en oeuvre dans le serveur NAS de gestion d'accès au service demandé par l'utilisateur.

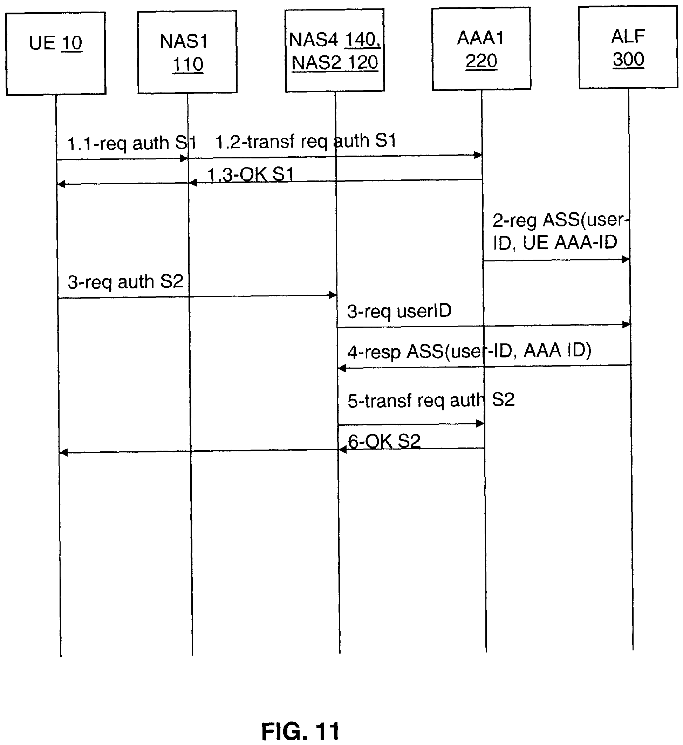

Un exemple de mise en oeuvre de l'invention va maintenant être décrit en relation avec la **Figure 11****.** Dans cet exemple, on considère que le terminal UE 10 de l'utilisateur s'est authentifié une première fois avec succès auprès du serveur d'authentification AAA1 120 lors de sa demande d'accès REQ S1 au réseau 1 via le réseau d'accès 21. Suite à cette première authentification, une association ASS entre un identifiant de cet utilisateur et un identifiant du serveur d'authentification AAA1 impliqué a été mémorisée par le serveur de localisation d'authentification ALF 300. Pour ce faire, le serveur AAA1 a envoyé au serveur de localisation ALF 300 une requête de mémorisation comprenant ladite association ASS entre l'identifiant user-ID de l'utilisateur et l'identifiant AAA-ID du serveur d'authentification AAA1. A titre d'exemple et de façon non limitative, un tel message peut être conforme à un protocole du type Diameter ou RADIUS, dans lequel lesdits identifiants sont placés chacun dans un élément d'informations de type AVP (Attribute Value Pair, en anglais) pour Diameter ou Attributes (en anglais) pour RADIUS existant ou créé spécifiquement pour les transporter.

Dans une variante, un message spécifique de type Diameter "AAA user location registration" est avantageusement créé pour l'enregistrement de l'association des identifiants dans le serveur ALF.

On considère maintenant que l'utilisateur envoie une nouvelle demande d'accès à un service REQ S2. On suppose que cette demande concerne un service proposé par l'opérateur sur son réseau 1, par exemple l'accès au réseau Internet 3 ou un autre service, tel qu'un service de mobilité. On notera qu'elle pourrait aussi concerner de nouveau l'accès au service S1 si l'utilisateur s'était déplacé et avait par conséquent changé de point d'accès (mobilité intra-réseau d'accès) ou même de réseau d'accès (mobilité inter-réseau d'accès), comme présenté en relation avec la **figure 4****.**

Sur réception d'une requête REQ S2 d'accès au service S2, le serveur NAS 4 140 de gestion de l'accès au service S2 cherche à obtenir des informations sur une éventuelle première authentification de l'utilisateur dans le réseau 1. Il récupère donc un identifiant de l'utilisateur requérant à partir de la requête reçue et envoie une demande de recherche d'association contenant l'identifiant d'utilisateur récupéré au serveur de localisation d'authentification ALF 300. Le serveur ALF 300 lui répond en lui envoyant l'association ASS demandée, ce qui permet au serveur de gestion d'authentification NAS4 de rechercher l'adresse IP @AAA1 du serveur d'authentification correspondant à l'identité AAA-ID reçue et d'envoyer une requête d'authentification de l'utilisateur user-ID pour le service S2 demandé au serveur AAA1 identifié. Comme ce dernier possède en mémoire le matériel d'authentification utilisé lors de la première authentification de l'utilisateur, une simple réauthentification est effectuée. Un message indicateur d'une réauthentification réussie est le cas échéant envoyé au serveur NAS4, qui accorde l'accès au service S2 à l'utilisateur requérant.

## Revendications

1. Procédé de gestion de l'authentification d'un utilisateur d'un réseau de télécommunications (1, 2) d'un opérateur, **caractérisé en ce qu'**il comprend les étapes suivantes :
- sur réception (E1) par un dispositif de gestion d'authentification, d'une demande d'accès à un service fourni par l'opérateur de ce réseau par ledit utilisateur, émission (E2) d'une requête d'identification d'un serveur d'authentification à destination d'un serveur de localisation d'authentification (ALF 300, 300'), ladite requête comprenant au moins un identifiant dudit utilisateur (user-ID); et
- sur réception (E3) d'une réponse en provenance du serveur de localisation d'authentification, comprenant un identifiant d'un serveur d'authentification associé (AAA_ID) audit identifiant de l'utilisateur, émission (E5) d'une demande d'authentification de l'utilisateur auprès du serveur identifié pour le service demandé.

2. Procédé de gestion de l'authentification d'un utilisateur selon la revendication 1, **caractérisé en ce que**, sur réception d'une réponse ne comprenant pas d'identifiant de serveur d'authentification associé à l'identifiant de l'utilisateur, le procédé met en oeuvre les étapes suivantes :
- émission d'une demande d'authentification (REQ-AUTH-S1) auprès d'un serveur d'authentification prédéterminé (déf-AAA).

3. Dispositif (DGA) de gestion de l'authentification d'un utilisateur d'un réseau de télécommunications d'un opérateur, **caractérisé en ce qu'**il comprend les moyens suivants :
- sur réception d'une demande d'accès au service fourni par l'opérateur de ce réseau par ledit utilisateur, émission d'une requête d'identification d'un serveur d'authentification comprenant un identifiant dudit utilisateur à destination d'une base de données de localisation; et
- sur réception d'une réponse en provenance du serveur de localisation d'authentification, comprenant un identifiant d'un serveur d'authentification associé audit identifiant de l'utilisateur, émission d'une demande d'authentification de l'utilisateur auprès du serveur identifié.

4. Serveur de gestion d'accès (NAS1, NAS2, NAS1', NAS2') à un service fourni par un opérateur d'un réseau de télécommunications, **caractérisé en ce qu'**il comprend un dispositif (DGA) de gestion d'authentification d'un utilisateur selon la revendication 1.

5. Procédé de mémorisation d'une localisation d'authentification d'un utilisateur d'un réseau de télécommunications, **caractérisé en ce qu'**il comprend, suite à une authentification réussie dudit utilisateur par un serveur d'authentification, une étape (F2) de mémorisation d'une association entre au moins un identifiant dudit utilisateur et un identifiant dudit serveur d'authentification dans un serveur de localisation d'authentification (ALF 300, 300').

6. Dispositif (DM) de mémorisation d'une localisation d'authentification d'un utilisateur d'un réseau de télécommunications, **caractérisé en ce qu'**il est apte à mettre en oeuvre, suite à une authentification réussie dudit utilisateur par un serveur d'authentification, des moyens de mémorisation d'une association entre au moins un identifiant dudit utilisateur et un identifiant dudit serveur d'authentification dans un serveur de localisation d'authentification (ALF 300, 300')).

7. Serveur d'authentification (AAA1, AAA2, pAAA1, pAAA2) d'un utilisateur qui demande à accéder à un service fourni par un opérateur d'un réseau de télécommunications, caractérisé qu'il comprend un dispositif de mémorisation d'une localisation d'authentification selon la revendication 6.

8. Serveur de localisation d'authentification (ALF 300, 300')) dans un réseau de télécommunications (1, 2), **caractérisé en ce qu'**il comprend des moyens de mémorisation d'une association entre un identifiant (user-ID) d'un utilisateur (UE 10) et un identifiant (AAA1-ID) d'un serveur d'authentification (AAA1) et des moyens de fourniture de l'association (ASS(user-ID, AAA1-ID) mémorisée en réponse à une requête reçue d'un serveur de gestion d'accès à un service fourni par le réseau (1).

9. Réseau de télécommunications (1, 2) d'un opérateur, comprenant au moins un premier serveur (NAS1) de gestion d'accès à au moins un service et au moins un deuxième serveur (NAS2, NAS3, NAS4) de gestion d'accès à au moins un service d'un opérateur et au moins deux serveurs d'authentification (AAA1, AAA2) aptes à authentifier un utilisateur (UE 10) qui demande à accéder audit au moins un service , **caractérisé en ce qu'**il comprend un serveur de localisation d'authentification (ALF 300, 300') selon la revendication 8 et **en ce que** le premier serveur de gestion d'accès et le deuxième serveur de gestion d'accès comprennent un dispositif de gestion d'authentification selon la revendication 2.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de gestion d'authentification d'un utilisateur selon la revendication 1.

11. Support d'enregistrement lisible par un ordinateur sur lequel est enregistré un programme d'ordinateur comprenant des instructions pour l'exécution des étapes du procédé de gestion de l'authentification d'un utilisateur selon la revendication 1.

12. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de mémorisation d'une localisation d'authentification d'un utilisateur selon la revendication 5.

13. Support d'enregistrement lisible par un ordinateur sur lequel est enregistré un programme d'ordinateur comprenant des instructions pour l'exécution des étapes du procédé de mémorisation d'une localisation d'authentification d'un utilisateur selon la revendication 5.

## Patentansprüche

1. Verfahren zur Verwaltung der Authentifikation eines Benutzers eines Telekommunikationsnetzes (1, 2) eines Betreibers, **dadurch gekennzeichnet, dass** es die folgenden Schritte umfasst:
- bei Empfang (E1), durch eine Vorrichtung zur Authentifikationsverwaltung, einer Anfrage zum Zugriff auf einen vom Betreiber dieses Netzes bereitgestellten Dienst durch den Benutzer, Senden (E2) einer Identifikationsanforderung eines Authentifikationsservers an einen Authentifikationslokalisierungsserver (ALF 300, 300'), wobei diese Anforderung wenigstens eine Kennung des Benutzers (user-ID) umfasst; und
- bei Empfang (E3) einer Antwort von dem Authentifikationslokalisierungsserver, die eine Kennung eines Authentifikationsservers (AAA_ID) umfasst, die der Kennung des Benutzers zugeordnet ist, Senden (E5) einer Anfrage zur Authentifikation des Benutzers bei dem identifizierten Server für den angefragten Dienst.

2. Verfahren zur Verwaltung der Authentifikation eines Benutzers nach Anspruch 1, **dadurch gekennzeichnet, dass** bei Empfang einer Antwort, die keine Kennung eines Authentifikationsservers umfasst, die der Kennung des Benutzers zugeordnet ist, das Verfahren die folgenden Schritte umfasst:
- Senden einer Anfrage zur Authentifikation (REQ-AUTH-S1) bei einem vorbestimmten Authentifikationsserver (déf-AAA).

3. Vorrichtung (DGA) zur Verwaltung der Authentifikation eines Benutzers eines Telekommunikationsnetzes eines Betreibers, **dadurch gekennzeichnet, dass** sie die folgenden Mittel umfasst:
- bei Empfang einer Anfrage zum Zugriff auf einen vom Betreiber dieses Netzes bereitgestellten Dienst durch den Benutzer, Senden einer Identifikationsanforderung eines Authentifikationsservers, die eine Kennung des Benutzers umfasst, an eine Lokalisierungsdatenbank; und
- bei Empfang einer Antwort von dem Authentifikationslokalisierungsserver, die eine Kennung eines Authentifikationsservers umfasst, die der Kennung des Benutzers zugeordnet ist, Senden einer Anfrage zur Authentifikation des Benutzers bei dem identifizierten Server.

4. Server zur Verwaltung des Zugriffs (NAS1, NAS2, NAS1', NAS2') auf einen vom Betreiber eines Telekommunikationsnetzes bereitgestellten Dienst, **dadurch gekennzeichnet, dass** er eine Vorrichtung (DGA) zur Verwaltung der Authentifikation eines Benutzers nach Anspruch 1 umfasst.

5. Verfahren zur Speicherung einer Authentifikationslokalisierung eines Benutzers eines Telekommunikationsnetzes, **dadurch gekennzeichnet, dass** es, im Anschluss an eine erfolgreiche Authentifikation des Benutzers durch einen Authentifikationsserver, einen Schritt (F2) der Speicherung einer Zuordnung zwischen wenigstens einer Kennung des Benutzers und einer Kennung des Authentifikationsservers in einem Authentifikationslokalisierungsserver (ALF 300, 300') umfasst.

6. Vorrichtung (DM) zur Speicherung einer Authentifikationslokalisierung eines Benutzers eines Telekommunikationsnetzes, **dadurch gekennzeichnet, dass** sie geeignet ist, im Anschluss an eine erfolgreiche Authentifikation des Benutzers durch einen Authentifikationsserver, Mittel zur Speicherung einer Zuordnung zwischen wenigstens einer Kennung des Benutzers und einer Kennung des Authentifikationsservers in einem Authentifikationslokalisierungsserver (ALF 300, 300') einzusetzen.

7. Authentifikationsserver (AAA1, AAA2, pAAA1, pAAA2) eines Benutzers, der darum ersucht, auf einen vom Betreiber eines Telekommunikationsnetzes bereitgestellten Dienst zuzugreifen, **dadurch gekennzeichnet, dass** er eine Vorrichtung zur Speicherung einer Authentifikationslokalisierung nach Anspruch 6 umfasst.

8. Authentifikationslokalisierungsserver (ALF 300, 300') in einem Telekommunikationsnetz (1, 2), **dadurch gekennzeichnet, dass** er Mittel zur Speicherung einer Zuordnung zwischen einer Kennung (user-ID) eines Benutzers (UE 10) und einer Kennung (AAA1-ID) eines Authentifikationsservers (AAA1) und Mittel zur Bereitstellung der gespeicherten Zuordnung (ASS(user-ID, AAA1-ID)) in Reaktion auf eine Anforderung, die von einem Server zur Verwaltung des Zugriffs auf einen vom Netz (1) bereitgestellten Dienst empfangen wird, umfasst.

9. Telekommunikationsnetz (1, 2) eines Betreibers, welches wenigstens einen ersten Server (NAS1) zur Verwaltung des Zugriffs auf wenigstens einen Dienst und wenigstens einen zweiten Server (NAS2, NAS3, NAS4) zur Verwaltung des Zugriffs auf wenigstens einen Dienst eines Betreibers und wenigstens zwei Authentifikationsserver (AAA1, AAA2), die geeignet sind, einen Benutzer (UE 10) zu authentifizieren, der darum ersucht, auf den wenigstens einen Dienst zuzugreifen, umfasst, **dadurch gekennzeichnet, dass** es einen Authentifikationslokalisierungsserver (ALF 300, 300') nach Anspruch 8 umfasst, und dadurch, dass der erste Server zur Verwaltung des Zugriffs und der zweite Server zur Verwaltung des Zugriffs eine Vorrichtung zur Verwaltung der Authentifikation nach Anspruch 2 umfassen.

10. Computerprogrammprodukt, das aus einem Kommunikationsnetz herunterladbar und/oder auf einem computerlesbaren Medium gespeichert und/oder von einem Mikroprozessor ausführbar ist, **dadurch gekennzeichnet, dass** es Programmcodeanweisungen für die Ausführung des Verfahrens zur Verwaltung der Authentifikation eines Benutzers nach Anspruch 1 umfasst.

11. Computerlesbares Aufzeichnungsmedium, auf dem ein Computerprogramm aufgezeichnet ist, das Anweisungen zur Ausführung der Schritte des Verfahrens zur Verwaltung der Authentifikation eines Benutzers nach Anspruch 1 umfasst.

12. Computerprogrammprodukt, das aus einem Kommunikationsnetz herunterladbar und/oder auf einem computerlesbaren Medium gespeichert und/oder von einem Mikroprozessor ausführbar ist, **dadurch gekennzeichnet, dass** es Programmcodeanweisungen für die Ausführung des Verfahrens zur Speicherung einer Authentifikationslokalisierung eines Benutzers nach Anspruch 5 umfasst.

13. Computerlesbares Aufzeichnungsmedium, auf dem ein Computerprogramm aufgezeichnet ist, das Anweisungen zur Ausführung der Schritte des Verfahrens zur Speicherung einer Authentifikationslokalisierung eines Benutzers nach Anspruch 5 umfasst

## Claims

1. Method for managing the authentication of a user of a telecommunications network (1, 2) of an operator, **characterized in that** it comprises the following steps:
- on receipt (E1) by an authentication management device, of a request for access to a service provided by the operator of this network by said user, issuing (E2) of a request for identification of an authentication server destined for an authentication location server (ALF 300, 300'), said request comprising at least one identifier of said user (user-ID); and
- on receipt (E3) from the authentication location server of a response comprising an identifier of an authentication server (AAA_ID) associated with said identifier of the user, issuing (E5) of a request for authentication of the user at the server identified for the requested service.

2. Method for managing the authentication of a user according to Claim 1, **characterized in that**, on receipt of a response not comprising any authentication server identifier associated with the identifier of the user, the method implements the following steps:
- issuing of a request for authentication (REQ-AUTH-S1) at a predetermined authentication server (def-AAA).

3. Device (DGA) for managing the authentication of a user of a telecommunications network of an operator, **characterized in that** it comprises the following means:
- on receipt of a request for access to the service provided by the operator of this network by said user, issuing of a request for identification of an authentication server comprising an identifier of said user destined for a location database; and
- on receipt from the authentication location server of a response comprising an identifier of an authentication server associated with said identifier of the user, issuing of a request for authentication of the user at the identified server.

4. Server (NAS1, NAS2, NAS1', NAS2') for managing access to a service provided by an operator of a telecommunications network, **characterized in that** it comprises a device (DGA) for managing authentication of a user according to Claim 1.

5. Method for storing an authentication location for a user of a telecommunications network, **characterized in that** it comprises, subsequent to a successful authentication of said user by an authentication server, a step (F2) of storing an association between at least one identifier of said user and an identifier of said authentication server in an authentication location server (ALF 300, 300').

6. Device (DM) for storing an authentication location for a user of a telecommunications network, **characterized in that** it is able to implement, subsequent to a successful authentication of said user by an authentication server, means for storing an association between at least one identifier of said user and an identifier of said authentication server in an authentication location server (ALF 300, 300').

7. Authentication server (AAA1, AAA2, pAAA1, pAAA2) for a user who requests access to a service provided by an operator of a telecommunications network, **characterized in that** it comprises a device for storing an authentication location according to Claim 6.

8. Authentication location server (ALF 300, 300') in a telecommunications network (1, 2), **characterized in that** it comprises means for storing an association between an identifier (user-ID) of a user (UE 10) and an identifier (AAA1-ID) of an authentication server (AAA1) and means for providing the association (ASS(user-ID, AAA1-ID)) stored in response to a request received from a server for managing access to a service provided by the network (1).

9. Telecommunications network (1, 2) of an operator, comprising at least one first server (NAS1) for managing access to at least one service and at least one second server (NAS2, NAS3, NAS4) for managing access to at least one service of an operator and at least two authentication servers (AAA1, AAA2) able to authenticate a user (UE 10) who requests access to said at least one service, **characterized in that** it comprises an authentication location server (ALF 300, 300') according to Claim **8** and **in that** the first access management server and the second access management server comprise an authentication management device according to Claim **2.**

10. Computer program product downloadable from a communication network and/or stored on a support readable by computer and/or executable by a microprocessor, **characterized in that** it comprises program code instructions for the execution of the method for managing authentication of a user according to Claim **1.**

11. Recording support readable by a computer on which is recorded a computer program comprising instructions for the execution of the steps of the method for managing the authentication of a user according to Claim 1.

12. Computer program product downloadable from a communication network and/or stored on a support readable by computer and/or executable by a microprocessor, **characterized in that** it comprises program code instructions for the execution of the method for storing an authentication location for a user according to Claim **5.**

13. Recording support readable by a computer on which is recorded a computer program comprising instructions for the execution of the steps of the method for storing an authentication location for a user according to Claim **5.**
